# EUROPÄISCHE PATENTSCHRIFT

(11) **EP 1 384 017 B1**
(45) Veröffentlichungstag und Bekanntmachung des Hinweises auf die Patenterteilung: **29.12.2004**
(21) Anmeldenummer: 02730217.3
(22) Anmeldetag: 27.04.2002
(51) Int. Cl.: F16H 15/38

(54) **STUFENLOSES REIBRADGETRIEBE**
CONTINUOUSLY VARIABLE FRICTION GEAR
TRANSMISSION PAR FRICTION A REGLAGE CONTINU

(30) Priorität: 03.05.2001 DE 10121487
(43) Veröffentlichungstag der Anmeldung: 28.01.2004
(73) Patentinhaber: ZF FRIEDRICHSHAFEN Aktiengesellschaft, 88038 Friedrichshafen (DE)
(72) Erfinder: WAFZIG, Jürgen, 88097 Eriskirch (DE)
(86) Internationale Anmeldenummer: PCT/EP2002/004689
(87) Internationale Veröffentlichungsnummer: WO 2002/090797

(56) Entgegenhaltungen:
- DE-A- 19 736 830
- DE-A- 19 754 725
- DE-A- 19 822 194
- PATENT ABSTRACTS OF JAPAN vol. 017, no. 159 (M-1389), 29. März 1993 (1993-03-29) & JP 04 327051 A (MAZDA MOTOR CORP), 16. November 1992 (1992-11-16)

## Beschreibung

Die vorliegende Erfindung betrifft ein stufenloses Reibradgetriebe nach dem Oberbegriff des Anspruchs 1.

Ein derartiges stufenloses Reibradgetriebe weist üblicherweise koaxial zu einer gemeinsamen Welle angeordnete Eingangs- und Ausgangsscheiben auf, die paarweise zueinander angeordnet sind und deren Innenflächen toroidförmig ausgestaltet sind, sowie zwischen den Paaren von Eingangs- und Ausgangsscheiben angeordnete Reibräder. Diese Reibräder stehen sowohl mit den Eingangsscheiben als auch mit den Ausgangsscheiben in Reibkontakt und übertragen das ihnen von der Eingangsscheibe übertragende Drehmoment auf die Ausgangsscheibe durch reibschlüssigen Kontakt, wobei die Drehzahl der Reibräder um so höher ist, je größer der Abstand zwischen ihrer Berührungsstelle mit der Eingangsscheibe und der Drehachse ist. Die Drehzahl der Ausgangsscheiben hingegen ist um so größer, je näher die Berührungsstelle zwischen Reibrad und Ausgangsscheibe an der Drehachse liegt. Durch Verschwenkung der Reibräder kann demzufolge die Drehzahl der Ausgangsscheibe stufenlos und beliebig eingestellt werden. Zu diesem Zweck sind die Drehachsen der Reibräder jeweils an einem Träger gelagert, der über eine Verschwenkeinrichtung ansteuerbar ist.

Ein derartiges stufenloses Reibradgetriebe ist im einzelnen in der DE 197 54 725 der Anmelderin beschrieben. Dieses Getriebe enthält zwei Getriebeeinheiten, die koaxial zur Eingangswelle angeordnet sind, wobei jede Getriebeeinheit eine Eingangsscheibe und eine Ausgangsscheibe aufweist, zwischen denen jeweils zwei Reibräder angeordnet sind und wobei jedes Reibrad an einem schwenkbaren Träger befestigt ist. Sowohl Eingangs- als auch Ausgangsscheiben sind auf einer Drehmomentwelle gelagert, die geringfügig in Axialrichtung relativ zur Eingangswelle verschiebbar ist. Die Eingangsscheibe der einen Getriebeeinheit ist drehfest mit der Drehmomentwelle verbunden, jedoch axial gleitend auf ihr gelagert. Auch die Eingangsscheibe der anderen Getriebeeinheit ist drehfest durch eine Mitnahmeverzahnung mit der Drehmomentwelle verbunden. Die beiden Ausgangsscheiben der beiden Getriebeeinheiten sind spiegelsymmetrisch zueinander und nebeneinander im Getriebe vorgesehen und auf einer gemeinsamen Buchse angeordnet, sodass ein Drehmoment, das von der einen Eingangsscheibe der zugehörigen Ausgangsscheibe und ein Drehmoment, das von der anderen Eingangsscheibe deren zugehörigen Ausgangsscheibe übertragen wird, von den beiden drehfest mit der Buchse verbundenen Ausgangsscheiben einem Zahnrad übertragen wird, welches mit einem Zahnrad einer Ausgangswelle kämmt. Eine rollenförmige Anpreßeinrichtung beaufschlagt eine der Eingangsscheiben, die in Axialrichtung verschiebbar auf der Eingangswelle gelagert sowie drehfest mit ihr verbunden ist.

Bei diesen bekannten stufenlosen Reibradgetrieben erfolgt üblicherweise die Verstellung der Übersetzung durch Verschiebung der Reibräder tangential zur Getriebeachse, wobei jedoch Schwenkkräfte von den Eingangs- und Ausgangsscheiben auf das dazwischen angeordnete Reibrad einwirken, da letztere zur Momentenübertragung an das Reibrad gepreßt werden müssen. Das Reibrad ist bei den herkömmlichen stufenlosen Reibradgetrieben derart in jeder Getriebeeinheit angeordnet, dass seine Schwenkachse im Mittelpunkt des durch die zugehörigen Eingangs- und Ausgangsscheiben gebildeten Torus angeordnet ist. In den Kontaktpunkten des Reibrades mit der zugehörigen Eingangsscheibe und Ausgangsscheibe werden dabei sogenannte Normalkräfte bei der Verstellung der Übersetzung hervorgerufen.

Um zu verhindern, dass bei ungleichen während der Übersetzungsverstellung auftretenden Normalkräften das am Reibrad auftretende dadurch bedingte Drehmoment eine unerwünschte Veränderung der Übersetzung des Getriebes hervorruft, wurde bereits in der DE 198 26 057 der Anmelderin vorgeschlagen, eine mögliche Differenz der Normalkräfte durch Erzeugung einer Steuerkraft zu kompensieren, wobei bei axial gehaltenem Reibrad diese Steuerkraft, die zur Verdrehung des Reibrades führt, an einer der beiden zugehörigen Scheiben aufgebracht werden kann, während bei axialer Fixierung einer der Scheiben diese Steuerkraft auf das Reibrad einwirkt.

Es wurde auch bereits vorgeschlagen, die Reibräder in einem stufenlosen Reibradgetriebe durch zwei Verbindungsstangen abzustützen, welche den auftretenden Reaktionskräften entgegenwirken. Die Schwenkbewegung der Reibräder wird dabei durch Wälzlager ermöglicht; diese Ausgestaltung bringt jedoch noch den Nachteil eines hohen Gewichtes des Reibradgetriebes sowie einer fehlenden Kopplung der Schwenkbewegungen der beiden in einer Getriebeeinheit angeordneten Träger für die Reibräder mit sich.

Bei diesen bekannten Reibradgetrieben müssen die Träger für die Reibräder ständig während des Betriebes mit hohen hydraulischen Drücken abgestützt werden. Dies beeinflußt sowohl den Wirkungsgrad des Reibradgetriebes negativ, da eine größere Hydraulikpumpe mit höherer Leistungsaufnahme erforderlich ist und bedingt außerdem Maßnahmen, um eine zusätzliche Synchronisierung zwischen den einzelnen Trägern zu gewährleisten, da die rein hydraulische Kopplung schwingungsanfällig sein kann.

Aufgabe der vorliegenden Erfindung ist es, die hydraulische Anpress- und Verstelleinrichtung durch eine direkte Ansteuerung des Schwenkwinkels der Träger zu ersetzen, ohne dass aufgrund unterschiedlicher Toleranzen und Lastverteilungen ein erhöhter Querschlupf mit daraus resultierendem niedrigerem Wirkungsgrad auftreten kann.

Die Lösung dieser Aufgabe erfolgt mit den im kennzeichnenden Teil des Anspruchs 1 angegebenen Merkmalen; vorteilhafte Ausgestaltungen sind in den Unteransprüchen beschrieben.

Erfindungsgemäß ist also vorgesehen, dass die beiden Träger einer jeden Getriebeeinheit über zwei unter je einem Winkel zur Längsachse des Reibradgetriebes verlaufende Endlosketten derart miteinander verbunden sind, dass die eine Kette den ersten (vorderen) Träger der ersten Getriebeeinheit und den zweiten (hinteren) Träger der zweiten Getriebeeinheit umschlingt und dass die andere Kette den zweiten (vorderen) Träger der ersten Getriebeeinheit und den ersten (hinteren) Träger der zweiten Getriebeeinheit umschlingt, sodass die beiden Endlosketten sich zwischen den vier Trägern kreuzen, jedoch nicht berühren und dass jeder Endloskette eine Ansteuereinrichtung zugeordnet ist, die zwischen den beiden Kettensträngen einer jeden Kette angeordnet ist und die deren beide Innenseiten mit einer einstellbaren Kraft beaufschlagt.

Die Ansteuereinrichtungen für die beiden Endlosketten sind als schwenkbar gelagerte Kettenspanner ausgestaltet, wobei die Drehachse für den Kettenspanner symmetrisch zu den beiden Kettensträngen angeordnet ist; durch Verschwenken des Kettenspanners mit einer hydraulisch oder mechanisch aufbringbaren einstellbaren Kraft werden die beiden Kettenstränge gespreizt, wodurch die Kettenspannung erhöht wird.

Gemäß einer Variante der vorliegenden Erfindung können die Ansteuereinrichtungen außerhalb der Ketten angeordnet sein und somit die Kettenvorspannung von außerhalb der Ketten beeinflußen.

Die gezielte Kettenvorspannung bzw. -entspannung durch die erfindungsgemäße Ansteuereinrichtung für die beiden Kettenstränge einer jeden Endloskette liefert die gewünschte Variabilität der Verstellung und Synchronisation. Dadurch, dass die Übersetzungseinstellung ohne Axialverschiebung erzielt werden kann, kann der Variatoraufbau wesentlich vereinfacht werden. Die Querjoche müssen nicht mehr beweglich die Kippbewegung durchführen können. Es ist lediglich eine Verdrehmöglichkeit der Träger ohne deren Axialhub zu gewährleisten. Somit können auch die Rahmenbügel teilweise entfallen und die Querjoche als fester Bestandteil in den Rahmen des stufenlosen Reibradgetriebes integriert werden.

Im folgenden wird die Erfindung anhand der Zeichnung näher erläutert, in der ein vorteilhaftes Ausführungsbeispiel dargestellt ist.

Es zeigen:
- Fig. 1: schematisch eine Ansicht eines stufenlosen Reibradgetriebes mit der Anordnung der Endlosketten und
- Fig. 2: ein Ausführungsbeispiel einer Ansteuereinrichtung für die Endloskette.

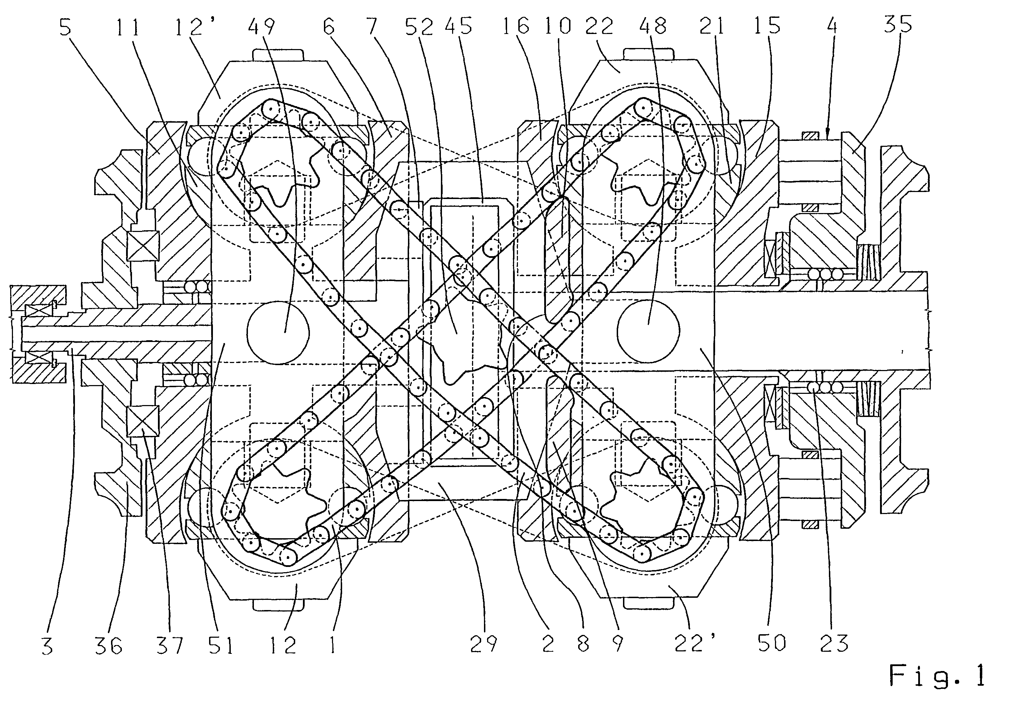

Das schematisch in Fig. 1 dargestellte stufenlose Reibradgetriebe mit zwei Getriebeeinheiten entspricht in seinem Aufbau demjenigen, das im gattungsgemäßen Dokument DE 197 36 830 der Anmelderin beispielsweise beschrieben ist. Die Eingangswelle 3 des Reibradgetriebes ist mit einem (nicht darstellten) Anfahrelement, z. B. einem Drehmomentwandler oder einer naßlaufenden Anfahrkupplung einer Antriebsmaschine eines Kraftfahrzeuges verbunden. Koaxial zur Eingangswelle 3 sind zwei Getriebeeinheiten angeordnet, wobei die eine Getriebeeinheit eine Eingangsscheibe 5 und eine Ausgangsscheibe 6 aufweist, deren einander zugewandte Oberflächen toroidförmig ausgestaltet sind. Die andere Getriebeeinheit weist eine Eingangsscheibe 15 und eine ihr gegenüber angeordnete Ausgangsscheibe 16 auf, deren einander zugewandte Oberflächen ebenfalls toroidförmig ausgestaltet sind. In den beiden Getriebeeinheiten sind jeweils zwei Reibräder 11, 21 vorgesehen, die an schwenkbaren Trägern 12 und 22 befestigt sind, sodass sie bezüglich der Längsachse der Eingangswelle 3 verschwenkt werden können. Die Reibräder 11, 21 stehen in reibschlüssigem Kontakt mit den beiden ihnen zugewandten Oberflächen der Eingangsscheiben 5, 15 und der Ausgangsscheiben 6, 16, wobei die Reibräder einer Getriebeeinheit symmetrisch zur Achse der Eingangswelle 3 angeordnet sind.

Mit 4 ist die übliche rollenförmige Anpreßeinrichtung bezeichnet, mit 7 ein Lagerstützglied, mit 23 ein Lager, mit 29 ein Rahmenbügel, mit 35 eine mit einer Kurvenbahn versehene Scheibe, mit 36 eine Axialscheibe, mit 37 ein Lager, mit 45 eine Aussparung, mit 48 und 49 zwei Zapfen und mit 50 und 51 zwei Querjoche.

Werden nun die Reibräder 11, 21 bezüglich der Längsachse der Eingangswelle geneigt, so verschieben sich die Berührungspunkte des Umfangs der Reibräder 11, 21 entlang der toroidförmigen Oberflächen sowohl der Eingangsscheiben als auch der Ausgangsscheiben, wodurch das Übersetzungsverhältnis zwischen einer Eingangs- und einer Ausgangsscheibe kontinuierlich, d. h. stufenlos, einstellbar ist.

Um nun die Schwenkwinkel der Träger direkt anzusteuern, ohne dass durch die Kopplung der Träger untereinander Verzwängungen durch unterschiedliche Toleranzen und Lastverteilungen mit erhöhtem Querschlupf und daraus resultierendem niedrigerem Wirkungsgrad bewirkt, werden nun erfindungsgemäß zwei Endlosketten 1, 2 vorgesehen, die jeweils diagonal vom linken vorderen Träger 12 zum rechten hinteren Träger 22 und vom rechten vorderen Träger 22' zum linken hinteren Träger 12' gemäß der Darstellung in Fig. 1 verlaufen und zwar dergestalt, dass jede Kette die beiden ihr zugeordneten Träger der beiden verschiedenen Getriebeeinheiten umschlingt, wobei sie sich zwischen den Trägerpaaren kreuzen, jedoch nicht berühren. Die beiden Ketten 1, 2 sind untereinander über die Übersetzungsansteuereinrichtung 52 synchronisiert. Diese weist im Wesentlichen eine Achse mit zwei Zahnrädern auf zwei unterschiedlichen Ebenen auf. Die Variabilität der Verstellung und die Synchronisation werden über eine gezielte Kettenvorspannung bzw. -entspannung erzielt und zwar durch eine erfindungsgemäß vorgesehene Ansteuereinrichtung 52, die beide Kettenstränge einer Endloskette zugleich beeinflußt. Die Übersetzungsansteuereinrichtung 52 greift in jeweils eine der Endlosketten ein und beeinflußt mittels der Träger 12, 22 die Variatorübersetzung. In der Figur sind die Ketten in einem nicht vollständig verspannten Zustand eingezeichnet, um die Darstellung übersichtlich zu gestalten; die eingezeichneten Zahnräder greifen jedoch erfindungsgemäß in die Kettenglieder ein.

Diese beiden Ansteuereinrichtungen für die beiden Endlosketten 1, 2 sind in Fig. 1 mit 8, 9 bezeichnet, wobei sie zwischen den beiden parallel verlaufenden Kettensträngen einer Endloskette derart angeordnet sind, dass sie mit ihren Enden an den Innenseiten der Kettenstränge anliegen. Symmetrisch zu den beiden Kettensträngen ist jeder Kettenspanner mittig an einer Drehachse schwenkbar gelagert und wird mit einer vorgegebenen Kraft mechanisch oder hydraulisch beaufschlagt, sodass je nach Schwenkbewegung der Ansteuereinrichtung die entsprechende Endloskette mehr oder weniger vorgespannt wird und das Verdrehspiel zwischen den Trägern einstellbar ist. Die Einstellung erfolgt hierbei ohne Axialverschiebung, was zu einem vereinfachten Aufbau des stufenlosen Reibradgetriebe beiträgt.

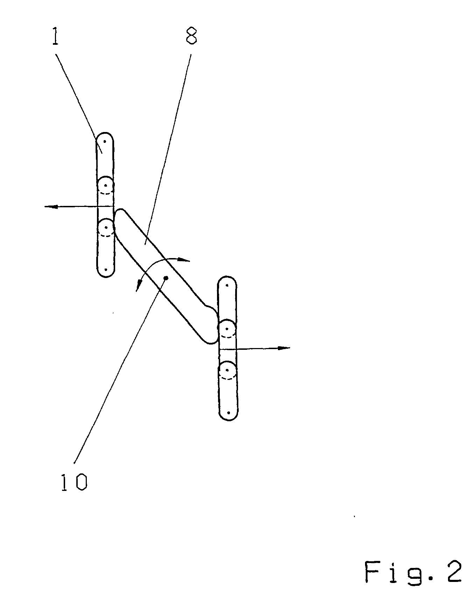

Fig. 2 zeigt ein Ausführungsbeispiel einer Ansteuereinrichtung 8, die vorteilhafterweise aus einem an einer Drehachse 10 gelagerten Schwenkhebel besteht, dessen eines Ende dem einen Kettenstrang der Endloskette 1 zugewandt ist und dessen anderes Ende dem zweiten Kettenstrang der Endloskette 1 zugeordnet ist, derart, dass die Enden des Schwenkhebels an den Innenseiten der Kettenstränge anliegen. Damit werden also beide Kettenstränge gleichzeitig mehr oder weniger vorgespannt.

### Bezugszeichen

- 1: Endloskette
- 2: Endloskette
- 3: Eingangswelle
- 4: Anpreßeinrichtung
- 5: Eingangsscheibe
- 6: Ausgangsscheibe
- 7: Lagerstützglied
- 8: Ansteuereinrichtung
- 9: Ansteuereinrichtung
- 10: Drehachse
- 11: Reibrad
- 12: Träger
- 15: Eingangsscheibe
- 16: Ausgangsscheibe
- 21: Reibrad
- 22: Träger
- 23: Lager
- 29: Rahmenbügel
- 35: Kurvenbahnscheibe
- 36: Axialscheibe
- 37: Lager
- 45: Aussparung
- 48: Zapfen
- 49: Zapfen
- 50: Querjoch
- 51: Querjoch
- 52: Übersetzungsansteuereinrichtung

## Patentansprüche

1. Stufenloses Reibradgetriebe mit:
- einer Eingangswelle,
- zwei koaxial zur Eingangswelle angeordneten Eingangsscheiben (5, 15) mit toroidförmigen Innenflächen,
- zwei koaxial zur Eingangswelle angeordneten Ausgangsscheiben (6, 16) mit toroidförmigen Innenflächen, wobei je eine Eingangsscheibe und eine Ausgangsscheibe ein Paar bilden und die beiden Ausgangsscheiben spiegelsymmetrisch zueinander und nebeneinander angeordnet sind,
- mehreren Reibrädern (11, 21), die zwischen den Innenflächen der Paare aus Eingangsscheiben und Ausgangsscheiben verschwenkbar angeordnet sind zur Übertragung eines Drehmoment von der Eingangsscheibe auf die zugehörige Ausgangsscheibe,
- einem Träger (12, 22; 12', 22') für jedes Reibrad (11, 21),
- eine Anpreßanordnung (4) für die drehmomentabhängige Axialkrafterzeugung, um die Eingangsscheiben in Richtung Ausgangsscheiben zu beaufschlagen und
- einer Verschwenkeinrichtung für die Träger der Reibräder,
**dadurch gekennzeichnet, dass** die Träger der beiden Getriebeeinheiten über zwei unter je einem Winkel zur Längsachse des stufenlosen Reibradgetriebes verlaufenden Endlosketten (1, 2) derart miteinander verbunden sind, dass die eine Kette (1) den ersten Träger (12) der ersten Getriebeeinheit und den zweiten Träger (22) der zweiten Getriebeeinheit umschlingt und dass die andere Kette (2) den zweiten Träger (12') der ersten Getriebeeinheit und den ersten Träger (22') der zweiten Getriebeeinheit umschlingt, sodass die beiden Endlosketten (1, 2) sich zwischen den Trägern kreuzen jedoch nicht berühren und dass jeder Endloskette (1, 2) eine Ansteuereinrichtung (8, 9) zugeordnet ist, die innerhalb der beiden Kettenstränge einer jeden Endloskette (1, 2) angeordnet ist und die deren Innenseiten gleichzeitig mit einer einstellbaren Kraft beaufschlagt, wobei eine Übersetzungsansteuereinrichtung (52) vorgesehen ist, welche in jeweils eine der Endlosketten eingreift und über diese mittels der Träger (12, 22) die Variatorübersetzung beeinflußt.

2. Stufenloses Reibradgetriebe nach Anspruch 1, **dadurch gekennzeichnet, dass** die Ansteuereinrichtung (8, 9) aus einem Schwenkhebel besteht, der an einer Achse (10) drehbar gelagert ist, die den Schwenkhebel mittig durchsetzt, sodass die beiden Enden des Schwenkhebels an den Innenseiten der beiden Kettenstränge einer jeden Endloskette (1, 2) mit einer vorgegebenen Kraft anliegen.

3. Stufenloses Reibradgetriebe nach Anspruch 1 oder 2, **dadurch gekennzeichnet, dass** der Schwenkhebel (8, 9) hydraulisch verschwenkbar ist.

4. Stufenloses Reibradgetriebe nach Anspruch 1 oder 2, **dadurch gekennzeichnet, dass** der Schwenkhebel (8, 9) mechanisch verschwenkbar ist.

5. Stufenloses Reibradgetriebe nach Anspruch 1 oder 2, **dadurch gekennzeichnet, dass** der Schwenkhebel (8, 9) elektrisch verstellbar ist.

6. Stufenloses Reibradgetriebe nach Anspruch 1 oder 2, **dadurch gekennzeichnet, dass** der Schwenkhebel (8, 9) pneumatisch verstellbar ist.

7. Stufenloses Reibradgetriebe nach einem der vorhergehenden Ansprüche, **dadurch gekennzeichnet, dass** die Ansteuereinrichtung (8, 9) außerhalb der Ketten (1, 2) angeordnet ist.

## Claims

1. Continuously variable friction transmission with:
- an input shaft,
- two input discs (5, 15) which are disposed coaxially with the input shaft and have toroidal inner faces,
- two output discs (6, 16) which are disposed coaxially with the input shaft and have toroidal inner faces, wherein each input disc and output disc form a pair and the two output discs are disposed in mirror-symmetrical fashion and side by side,
- a plurality of friction wheels (11, 12) which are pivotably disposed between the inner faces of the pairs of input discs and output discs to transmit a torque from the input disc to the associated output disc,
- a carrier (12, 22; 12', 22') for each friction wheel (11, 21),
- a contact pressure arrangement (4) for producing an axial force, in a torque-dependent fashion, in order to act on the input discs in the direction of the output discs, and
- a pivoting device for the carriers of the friction wheels,
**characterised in that** the carriers of the two transmission units are connected together via two continuous chains (1, 2), which extend at a respective angle to the longitudinal axis of the continuously variable friction transmission, such that the one chain (1) wraps around the first carrier (12) of the first transmission unit and the second carrier (22) of the second transmission unit and that the other chain (2) wraps around the second carrier (12') of the first transmission unit and the first carrier (22') of the second transmission unit, so that the two continuous chains (1, 2) intersect between the four carriers, although do not contact one another, and that a control device (8, 9) is associated with each continuous chain (1, 2), which device is disposed within the two chain strands of each continuous chain (1, 2) and acts on their inner sides at the same time with an adjustable force, wherein a transmission ratio control device (52) is provided which engages in one of the continuous chains and influences the variator transmission ratio via this by means of the carriers (12, 22).

2. Continuously variable friction transmission according to Claim 1, **characterised in that** the control device (8, 9) consists of a pivoted lever which is rotatably mounted at a shaft (10) which passes centrally through the pivoted lever, so that the two ends of the pivoted lever lie against the inner sides of the two chain strands of each continuous chain (1, 2) with a predetermined force.

3. Continuously variable friction transmission according to Claim 1 or 2, **characterised in that** the pivoted lever (8, 9) can be pivoted hydraulically.

4. Continuously variable friction transmission according to Claim 1 or 2, **characterised in that** the pivoted lever (8, 9) can be pivoted mechanically.

5. Continuously variable friction transmission according to Claim 1 or 2, **characterised in that** the pivoted lever (8, 9) can be adjusted electrically.

6. Continuously variable friction transmission according to Claim 1 or 2, **characterised in that** the pivoted lever (8, 9) can be adjusted pneumatically.

7. Continuously variable friction transmission according to any one of the preceding Claims, **characterised in that** the control device (8, 9) is disposed outside of the chains (1, 2).

## Revendications

1. Transmission à variation continue à roues de friction, comprenant :
- un arbre d'entrée,
- deux poulies d'entrée (5, 15), disposées coaxialement à l'arbre d'entrée, comportant des surfaces internes toroïdales,
- deux poulies de sortie (6, 16), disposées coaxialement à l'arbre d'entrée, comportant des surfaces internes toroïdales, une poulie d'entrée et une poulie de sortie formant à chaque fois une paire et les deux poulies de sortie étant disposées symétriquement l'une de l'autre comme un objet et son image dans un miroir et l'une à côté de l'autre,
- plusieurs roues de friction (11, 21) qui sont disposées pour pouvoir pivoter entre les surfaces internes des paires de poulies d'entrée et de sortie, pour transmettre un couple de la poulie d'entrée à la poulie de sortie correspondante,
- un support (12, 22; 12', 22') pour chaque roue de friction (11, 21),
- un dispositif de pression (4) destiné à produire une force axiale fonction du couple, pour charger les poulies d'entrée en direction des poulies de sortie, et
- un dispositif de pivotement pour les supports des roues de friction,
**caractérisée en ce que** les supports des deux unités de transmission sont reliés l'un à l'autre au moyen de deux chaînes sans fin (1, 2) s'étendant chacune en formant un angle avec l'axe longitudinal de la transmission à roues de friction à variation continue, de telle manière que l'une des chaînes (1) embrasse le premier support (12) de la première unité de transmission et le deuxième support (22) de la deuxième unité de transmission et que l'autre chaîne (2) embrasse le deuxième support (12') de la première unité de transmission et le premier support (22') de la deuxième unité de transmission, de sorte que les deux chaînes sans fin (1, 2) se croisent entre les deux supports mais ne se touchent pas, et **en ce que**, à chaque chaîne sans fin (1, 2) est associée une unité de pilotage (8, 9) qui est disposée à l'intérieur de deux brins de chaque chaîne sans fin (1, 2) et qui charge simultanément leurs côtés intérieurs avec une force réglable, un dispositif de pilotage du rapport (52) étant prévu qui engrène à chaque fois dans une des chaînes sans fin et qui, par l'intermédiaire de celle-ci, agit sur le rapport du variateur au moyen des supports (12, 22).

2. Transmission à variation continue à roues de friction selon la revendication 1, **caractérisée en ce que** le dispositif de pilotage (8, 9) est constitué par un levier oscillant qui tourillonne sur un axe (10) qui traverse le levier oscillant en son milieu, de sorte que les deux extrémités du levier oscillant sont appuyées contre les faces internes des deux brins de chacune des chaînes sans fin (1, 2) avec une force prédéterminée.

3. Transmission à variation continue à roues de friction selon la revendication 1 ou 2, **caractérisée en ce que** le levier oscillant (8, 9) peut être orienté hydrauliquement.

4. Transmission à variation continue à roues de friction selon la revendication 1 ou 2, **caractérisée en ce que** le levier oscillant (8, 9) peut être orienté mécaniquement.

5. Transmission à variation continue à roues de friction selon la revendication 1 ou 2, **caractérisée en ce que** le levier oscillant (8, 9) peut être orienté électriquement.

6. Transmission à variation continue à roues de friction selon la revendication 1 ou 2, **caractérisée en ce que** le levier oscillant (8, 9) peut être orienté pneumatiquement.

7. Transmission à variation continue à roues de friction selon l'une des revendications précédentes, **caractérisée en ce que** le dispositif de pilotage (8, 9) est disposé à l'extérieur des chaînes (1, 2).
